# EUROPÄISCHE PATENTSCHRIFT

(11) **EP 3 983 264 B1**
(45) Veröffentlichungstag und Bekanntmachung des Hinweises auf die Patenterteilung: **17.04.2024**
(21) Anmeldenummer: 20732144.9
(22) Anmeldetag: 04.06.2020
(51) Int. Cl.: A47B 43/00, B62D 25/24, B62D 33/06

(54) **VORRICHTUNG ZUR BELEUCHTUNG EINES FAHRERHAUSES FÜR EIN NUTZFAHRZEUG**
DEVICE FOR ILLUMINATING A CAB OF A UTILITY VEHICLE
DISPOSITIF PERMETTANT L'ÉCLAIRAGE D'UNE CABINE DE CONDUITE D'UN VÉHICULE UTILITAIRE

(30) Priorität: 13.06.2019 DE 102019004186
(43) Veröffentlichungstag der Anmeldung: 20.04.2022
(73) Patentinhaber: MAN Truck & Bus SE, 80995 München (DE)
(72) Erfinder: SCHMITZ, Andreas, 80995 München (DE)
(74) Vertreter: v. Bezold & Partner Patentanwälte - PartG mbB
(86) Internationale Anmeldenummer: PCT/EP2020/065437
(87) Internationale Veröffentlichungsnummer: WO 2020/249451

(56) Entgegenhaltungen:
- EP-A2- 1 336 552
- DE-A1- 10 334 552
- DE-A1- 19 745 275
- DE-A1-102006 009 481
- DE-A1-102013 020 313
- DE-C2- 4 025 862
- DE-U1- 8 322 763
- KR-A- 20060 089 269
- US-A- 5 775 796
- US-A1- 2007 189 027

## Beschreibung

Die Erfindung betrifft eine Vorrichtung zur Beleuchtung eines Fahrerhauses für ein Nutzfahrzeug, vorzugsweise einen Lastkraftwagen, mit einem Dachbereich, einer Staufachvorrichtung und einem Beleuchtungselement.

Lastkraftwagen-Fahrerhäuser werden oft mit erhöhten Dächern ausgeliefert. In dieser Ausführung beinhalten die Fahrerhäuser dann auch über der Frontscheibe einen zusätzlichen Stauraum, auch Gepäckablage genannt. Dieser Stauraum wird zumeist mit Deckeln bzw. Türen verschlossen. Hierzu gibt es auch Varianten mit Jalousien.

Typischerweise wird der Stauraum bei geschlossenen Türen oder Jalousien nicht beleuchtet. Erst nach dem Öffnen wird über einen Kontakt eine Innenbeleuchtung des Stauraums geschaltet.

Aus der DE 197 34 624 C2 ist ein Leuchtenkörper für die Innenbeleuchtung von Lastkraftwagen-Fahrerhäusern bekannt. Der Leuchtenkörper weist eine Raumleuchte und eine Leselampe auf, die übereinander angeordnet, wobei die Raumleuchte oben und die Leselampe unten angeordnet ist. Der Leuchtenkörper ist so stabil ausgestaltet, dass er in Einbaulage eine tragende Funktion für eine im vorderen Dachbereich des Fahrerhauses angeordnete Gepäckablage hat.

Aus der DE 10 2006 009 481 A1 ist ein Innenauskleidungsteil bekannt, das ein Staufach vorsieht, das durch einen bewegbaren Deckel verschließbar ist. Ferner ist an dem Innenauskleidungsteil eine Lichtquelle an einer Stelle vorgesehen, die zu einer Randkante des Deckels benachbart ist, wenn dieser sich in ganz oder teilweise geschlossener Position befindet. Der Deckel besteht zudem wenigstens abschnittweise aus einem transparent streuenden Material.

Aus der US 2007/0189027 A1 ist eine Konsolenvorrichtung für ein Fahrzeug bekannt, wobei die Konsolenvorrichtung einen Gehäusekörper umfasst, der mit einer Seitenfläche am Deckenteil des Fahrzeugs befestigt ist. Die Vorrichtung hat einen vertieften Teil, der durch eine Öffnung in einer anderen Seitenfläche gebildet wird, und einen Abdeckkörper, der am Gehäusekörper schwenkbar ist. Die Aussparung kann verschlossen werden, indem der Abdeckkörper über die Aussparung des Gehäusekörpers geschoben wird. Ein auf der dem ausgesparten Teil gegenüberliegenden Oberfläche des Abdeckkörpers ausgebildeter Aufbewahrungsabschnitt ermöglicht es, kleine Gegenstände darin aufzubewahren und nur dann zu entnehmen, wenn der ausgesparte Teil geöffnet ist. Ein Beleuchtungsabschnitt, der Licht in das Innere der Fahrzeugkabine abstrahlt, ist auf einer anderen Oberfläche des Abdeckkörpers ausgebildet. Aus der KR 2006 0089269 A betrifft eine Struktur, die das Innere einer Sonnenbrillenablage beleuchtet, wobei es die Struktur ermöglicht, in einer Kartenlampe abgestrahltes Licht mit einem transparenten Harz zu sammeln und durch das transparente Harz in die Sonnenbrillenschale zu leiten. Zu diesem Zweck kommuniziert die Struktur mit einem ersten Gehäuse, in dem die Sonnenbrille aufgenommen ist, und mit einem zweiten Gehäuse, in dem eine Kartenlampe ausgebildet ist, über ein transparentes Harz.

Aus der DE 83 22763 U1 ist ein LKW-Fahrerhaus bekannt, bei dem bei einem kompakten Festhimmel des LKW-Fahrerhauses im Bereich des Festhimmels befindliche Funktionsteile des Fahrerhauses, wie Anlenkeinrichtungen für Bettenfangvorrichtung, Leuchten, obere Ablagefächer oder dergleichen, einstückig im Festhimmel integriert sind. Dadurch kann der Festhimmel mit Funktionselementen als kompaktes Bauteil vormontiert und nachher einfach im Fahrerhaus befestigt werden.

EP1336552 A2 weist ein LKW mit einem Fahrerhaus mit einem Dachverkleidungselement auf, der Ablagefächer, Beleuchtungskörper sowie eine Dachluke 18 integriert.

Der Erfindung liegt die Aufgabe zu Grunde, eine alternative und/oder verbesserte Vorrichtung zur Beleuchtung eines Fahrerhauses für ein Nutzfahrzeug zu schaffen.

Die Aufgabe wird gelöst durch die Merkmale des unabhängigen Anspruchs. Vorteilhafte Weiterbildungen sind in den abhängigen Ansprüchen und der Beschreibung angegeben.

Die Erfindung schafft eine Vorrichtung zur Beleuchtung eines Fahrerhauses für ein Nutzfahrzeug, vorzugsweise einen Lastkraftwagen. Die Vorrichtung weist einen Dachbereich auf. Die Vorrichtung weist eine Staufachvorrichtung (z. B. aufweisend zwei äußere und ein mittleres Staufach) auf, die im Dachbereich angeordnet ist und zumindest teilweise mittels eines Türelements verschließbar ist. Die Vorrichtung weist ein Beleuchtungselement auf, das so an einem Dachhimmel des Dachbereichs angeordnet (z. B. positioniert und/oder ausgerichtet) ist, dass (z. B. ohne Verstellung des Beleuchtungselements) mittels des Beleuchtungselements ein Fahrerhaus-Innenraum und ein Innenraum der Staufachvorrichtung hinter dem Türelement bei vollständig geöffnetem Türelement beleuchtbar ist, vorzugsweise gleichzeitig.

Die Vorrichtung bietet somit eine Funktionsintegration, da das Beleuchtungselement nicht nur zur Beleuchtung des Fahrerhaus-Innenraums dient, sondern auch zur Beleuchtung der Staufachvorrichtung bzw. der Gepäckablage. Das Beleuchtungselement ist insbesondere so zu positionieren, dass es durch das geöffnete Element nicht verdeckt wird. Durch die Übernahme der Funktion der Beleuchtung des Innenraums der Staufachvorrichtung kann beispielsweise eine Anzahl von innerhalb der Staufachvorrichtung verbauten Beleuchtungselementen verringert werden und/oder mehr Bereiche innerhalb der Staufachvorrichtung können ausgeleuchtet werden.

Es ist möglich, dass das Beleuchtungselement einen Raumleuchtenabschnitt zur Beleuchtung des Fahrerhaus-Innenraums und des Innenraums der Staufachvorrichtung aufweist. Optional kann das Beleuchtungselement einen z. B. farbigen Ambiente-Beleuchtungsabschnitt aufweisen.

Beispielsweise kann das Beleuchtungselement fest eingebaut sein. Somit kann das Beleuchtungselement beispielsweise nicht-bewegbar und/oder nicht-verstellbar sein.

In einem Ausführungsbeispiel ist die Staufachvorrichtung im vorderen Dachbereich und/oder fahrerhausfrontseitig angeordnet.

In einem weiteren Ausführungsbeispiel ist das Türelement zum Öffnen nach oben schwenkbar.

In einem weiteren Ausführungsbeispiel wird das Beleuchtungselement beim Öffnen des Türelements zweckmäßig automatisch eingeschaltet und/oder beim Schließen des Türelements zweckmäßig automatisch ausgeschaltet. Dies ermöglicht, dass die Staufachvorrichtung beim Öffnen des Türelements automatisch durch das Beleuchtungselement ausgeleuchtet werden kann.

In einer Ausführungsform ist ein Abstand in einer Dachlängsrichtung zwischen dem mindestens einen Beleuchtungselement und dem Türelement gleich oder größer als eine Höhe Türelements. Alternativ oder zusätzlich verdeckt das Türelement im geöffneten Zustand das Beleuchtungselement nicht. Damit kann verhindert werden, dass das geöffnete Türelement den Innenraum der Staufachvorrichtung vor dem Licht des Beleuchtungselements abschirmt. In einer weiteren Ausführungsform verdeckt das Türelement im geöffneten Zustand nur einen Ambiente-Beleuchtungsabschnitt des Beleuchtungselements. Im Gegensatz dazu kann ein (Innen-)Raum-Beleuchtungsabschnitt des Beleuchtungselements durch das Türelement im geöffneten Zustand nicht verdeckt sein.

Gemäß der Erfindung ist das Beleuchtungselement in einem (z. B. Innen-)Rahmen oder einer rahmenförmigen (z. B. Innen-)Verkleidung einer (z. B. manuell oder motorisch öffenbaren) Dachlukenvorrichtung angeordnet. Somit muss das Beleuchtungselement nicht separat montiert werden, sondern kann direkt beim Einbau der Dachlukenvorrichtung in das Fahrerhaus eingebaut werden.

In einer weiteren Ausführungsvariante ist das Beleuchtungselement in einem parallel zu einer Dachlängsrichtung ausgerichteten Schenkel des Rahmens oder der rahmenförmigen Verkleidung angeordnet.

In einer Weiterbildung ist das Beleuchtungselement zumindest teilweise in einem hinteren Eckbereich des Rahmens oder der rahmenförmigen Verkleidung angeordnet. Zusätzlich oder alternativ ist das Beleuchtungselement angrenzend an einen (z. B. bezüglich einer Dachlängsrichtung) hinteren Schenkel des Rahmens oder der rahmenförmigen Verkleidung angeordnet, wobei der hintere Schenkel vorzugsweise senkrecht zur Dachlängsrichtung ausgerichtet ist. Damit kann ein möglichst großer Abstand zur Staufachvorrichtung trotz Integration in die Dachlukenvorrichtung erreicht werden. Dies kann ermöglichen, dass das Beleuchtungselement nicht durch das geöffnete Türelement verdeckt wird.

In einem weiteren Ausführungsbeispiel weist ein (z. B. bezüglich einer Dachlängsrichtung) hinterer Schenkel des Rahmens oder der rahmenförmigen Verkleidung eine zurückversetzte Unterseitenfläche auf, vorzugsweise zum Erhöhen einer Kopffreiheit einer unter der Dachlukenvorrichtung sitzenden Person. Vorzugsweise kann die zurückversetzte Unterseitenfläche gegenüber mindestens einer Unterseitenfläche des parallel zu der Dachlängsrichtung ausgerichteten Schenkels zurückversetzt sein, vorzugsweise um mindestens 20 mm, besonders bevorzugt um mindestens 30 mm, z. B. in einem Bereich zwischen 30 mm und 40 mm. Vorzugsweise kann die zurückversetzte Unterseitenfläche im Wesentlichen entlang einer gesamten Länge und/oder entlang einer gesamten Breite des hinteren Schenkels zurückversetzt sein. Dies kann ermöglichen, dass die Vorrichtung auch bei vergleichsweise flachen Dachkonstruktionen eingesetzt werden kann. Die Vorrichtung bietet zweckmäßig den Vorteil der Erhöhung der Kopffreiheit der unter dem hinteren Schenkel des Rahmens bzw. der Verkleidung der Dachlukenvorrichtung sitzenden Person, die typischerweise erhöht oberhalb des Motortunnels sitzt. Die Abflachung des hinteren Schenkels ist möglich durch die Integration des Beleuchtungselements in den parallel zur Dachlängsrichtung verlaufenden Schenkel des Rahmens bzw. der Verkleidung. Die Vorrichtung kann ermöglichen, dass bei einer möglichen Intrusion des Daches bei einem Unfallereignis (z. B. simuliert mittels ECE R29-3 Test C) genügend Überlebensraum und Kopffreiheit für den mittleren, erhöht sitzenden Passagier geschaffen werden kann. Dieser Vorteil kann mit einfachen Mitteln kostenneutral durch entsprechende Anordnung des Beleuchtungselements erreicht werden, ohne dass hierfür beispielsweise aufwendige Versteifungsmaßnahmen im Rohbaudach selbst erforderlich wären.

In einen Ausführungsbeispiel ist das Beleuchtungselement in einem senkrecht zur Dachlängsrichtung ausgerichteten, (z. B. bezüglich einer Dachlängsrichtung) hinteren Schenkel des Rahmens oder der rahmenförmigen Verkleidung angeordnet. Mit dieser Variante kann ein größtmöglicher Abstand zur Staufachvorrichtung erreicht werden, sodass ein Verdecken des Beleuchtungselements durch das geöffnete Türelement verhindert werden kann. Diese Variante kann insbesondere bei vergleichsweise hohen Dachkonstruktionen verwendet werden.

In einem weiteren Ausführungsbeispiel weist die Vorrichtung ein weiteres Beleuchtungselement auf. Das weitere Beleuchtungselement kann beispielsweise wie das zuvor beschriebene Beleuchtungselement ausgeführt sein. Vorzugsweise kann das weitere Beleuchtungselement so an dem Dachhimmel angeordnet (z. B. positioniert und/oder ausgerichtet) sein, dass mittels des weiteren Beleuchtungselements der Fahrerhaus-Innenraum und der Innenraum der Staufachvorrichtung hinter dem Türelement bei vollständig geöffnetem Türelement beleuchtbar ist. Vorzugsweise kann das weitere Beleuchtungselement in dem Rahmen oder der rahmenförmigen Verkleidung der Dachlukenvorrichtung angeordnet sein, vorzugsweise an einer Position gegenüberliegend zu dem Beleuchtungselement oder neben dem Beleuchtungselement.

In einer Ausführungsform weist die Staufachvorrichtung ein mittleres Staufach z. B. mit einem Einlegeboden auf. Vorzugsweise kann das mittlere Staufach durch das Beleuchtungselement beleuchtet werden. Bevorzugt kann das Beleuchtungselement so angeordnet sein, dass ein Innenraum des mittleren Staufachs unterhalb des Einlegebodens beleuchtbar ist.

In einer Weiterbildung weist das mittlere Staufach ein Staufach-Beleuchtungselement auf, mit dem ein Innenraum des mittleren Staufachs oberhalb des Einlegebodens beleuchtbar ist.

In einer weiteren Ausführungsform ist das mittlere Staufach mittels einer Jalousie verschließbar oder unverschließbar oder zumindest nicht mittels eines Türelements verschließbar. Es ist möglich, dass beim Öffnen der Jalousie das Beleuchtungselement automatisch eingeschaltet und/oder beim Schließen der Jalousie das Beleuchtungselement automatisch ausgeschaltet wird.

In einer Ausführungsvariante weist die Staufachvorrichtung zwei äußere Staufächer (z. B. eines auf der Fahrerseite und eines auf der Beifahrerseite) auf, die jeweils mit einem Türelement verschließbar sind. Die Türelemente können z. B. zum Öffnen nach oben schwenkbar sein. Zweckmäßig können die Türelemente eine Höhe aufweisen, die kleiner als ein Abstand in einer Dachlängsrichtung zwischen dem Beleuchtungselement und den Türelementen im geschlossen Zustand ist. Beispielsweise kann das Beleuchtungselement in einem senkrecht zur Dachlängsrichtung ausgerichteten, hinteren Schenkel eines Rahmens oder einer rahmenförmigen Verkleidung einer Dachlukenvorrichtung angeordnet sein. Vorzugsweise kann der hintere Schenkel und/oder das Beleuchtungselement im geöffneten Zustand der Türelemente zumindest teilweise zwischen den Türelementen angeordnet sein. Diese Ausführungsvariante kann besonders bevorzugt bei hohen Dachkonstruktionen mit einer ebenfalls hohen Staufachvorrichtung verwendet werden.

In einer anderen Ausführungsvariante weist die Staufachvorrichtung zwei äußere Staufächer (z. B. eines auf der Fahrerseite und eines auf der Beifahrerseite) auf, die jeweils mit einem Türelement verschließbar sind. Die Türelemente können z. B. zum Öffnen nach oben schwenkbar sein. Zweckmäßig können die Türelemente eine Höhe aufweisen, die kleiner, gleich oder größer als ein Abstand in einer Dachlängsrichtung zwischen dem Beleuchtungselement und den Türelementen im geschlossen Zustand ist. Beispielsweise kann das Beleuchtungselement in einem parallel zu einer Dachlängsrichtung ausgerichteten Schenkel des Rahmens oder der rahmenförmigen Verkleidung angeordnet sein. Vorzugsweise kann zumindest eines der Türelemente im geöffneten Zustand nur einen Ambiente-Beleuchtungsabschnitt und vorzugsweise nicht einen Raum-Beleuchtungsabschnitt des Beleuchtungselements verdecken. Alternativ kann keines der Türelemente im geöffneten Zustand das Beleuchtungselement verdecken. Diese Ausführungsvariante kann besonders bevorzugt bei mittelhohen Dachkonstruktionen mit ebenfalls mittelhohen Staufachvorrichtung verwendet werden. Durch die Anordnung des Beleuchtungselements nicht im hinteren Schenkel kann eine Kopffreiheit und ein Überlebensraum eines unter dem hinteren Schenkel sitzenden Mittelsitzpassagiers, der erhöht oberhalb eines Motortunnels sitzen kann, erhöht werden.

Die Erfindung betrifft auch ein Fahrerhaus für ein Nutzfahrzeug, vorzugsweise einen Lastkraftwagen, mit der Vorrichtung zur Beleuchtung wie hierin offenbart.

Die Erfindung betrifft auch ein Nutzfahrzeug, vorzugsweise einen Lastkraftwagen, mit einer Vorrichtung wie hierin offenbart. Das Nutzfahrzeug kann die gleichen Vorteile erzielen, wie hierin für die Vorrichtung offenbart ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht von schräg unten auf einen Dachbereich eines Fahrerhauses eines Nutzfahrzeugs gemäß einem Ausführungsbeispiel der vorliegenden Erfindung;
- Figur 2: eine Schnittansicht durch den beispielhaften Dachbereich von Figur 1 entlang einer Mittelvertikallängsebene des Fahrerhauses;
- Figur 3: eine Ansicht von unten auf den beispielhaften Dachbereich von Figur 1;
- Figur 4: eine schematische Ansicht einer Ausleuchtung des beispielhaften Dachbereichs von Figur 1;
- Figur 5: eine perspektivische Ansicht von schräg unten auf einen Dachbereich eines Fahrerhauses eines Nutzfahrzeugs gemäß einem weiteren Ausführungsbeispiel der vorliegenden Erfindung;
- Figur 6: eine Schnittansicht durch den beispielhaften Dachbereich von Figur 5 entlang einer Mittelvertikallängsebene des Fahrerhauses;
- Figur 7: eine Ansicht von unten auf den beispielhaften Dachbereich von Figur 5; und
- Figur 8: eine schematische Ansicht einer Ausleuchtung des beispielhaften Dachbereichs von Figur 5.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

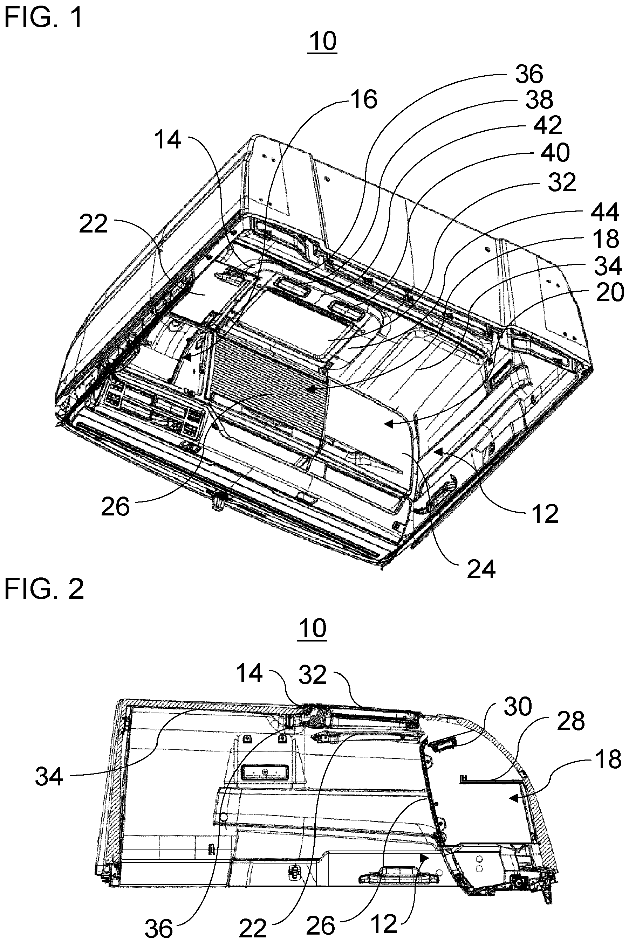

Die Figuren 1 bis 4 zeigen einen Dachbereich 10 eines nicht näher dargestellten Fahrerhauses eines Nutzfahrzeugs. Vorzugsweise ist das Nutzfahrzeug ein Lastkraftwagen. Im Dachbereich 10 sind eine Staufachvorrichtung 12 und eine Dachlukenvorrichtung 14 angeordnet.

Die Staufachvorrichtung 12 ist fahrerhausfrontseitig oberhalb von einer Windschutzscheibe angeordnet. Die Staufachvorrichtung 12 weist beispielsweise drei Staufächer 16, 18 und 20 auf, insbesondere ein fahrerseitiges äußeres Staufach 16, ein mittleres Staufach 18 und ein beifahrerseitiges äußeres Staufach 20. Es ist beispielsweise auch möglich, dass die Staufachvorrichtung 12 mehr oder weniger Staufächer aufweist, die beispielsweise übereinander und/oder nebeneinander angeordnet sein können.

Die drei Staufächer 16, 18, 20 sind nebeneinander angeordnet. Die äußeren Staufächer 16, 18 sind jeweils mittels eines Türelements 22, 24 verschließbar. Die Türelemente 22, 24 können zum Öffnen nach oben verschwenkt werden. Das mittlere Staufach 18 ist beispielsweise mittels einer Jalousie 26 verschließbar. Das mittlere Staufach 18 ist durch einen Einlegeboden 28 in einen oberen Bereich und einen unteren Bereich unterteilt. Der obere Bereich kann mittels eines Staufach-Beleuchtungselements 30 beleuchtet werden.

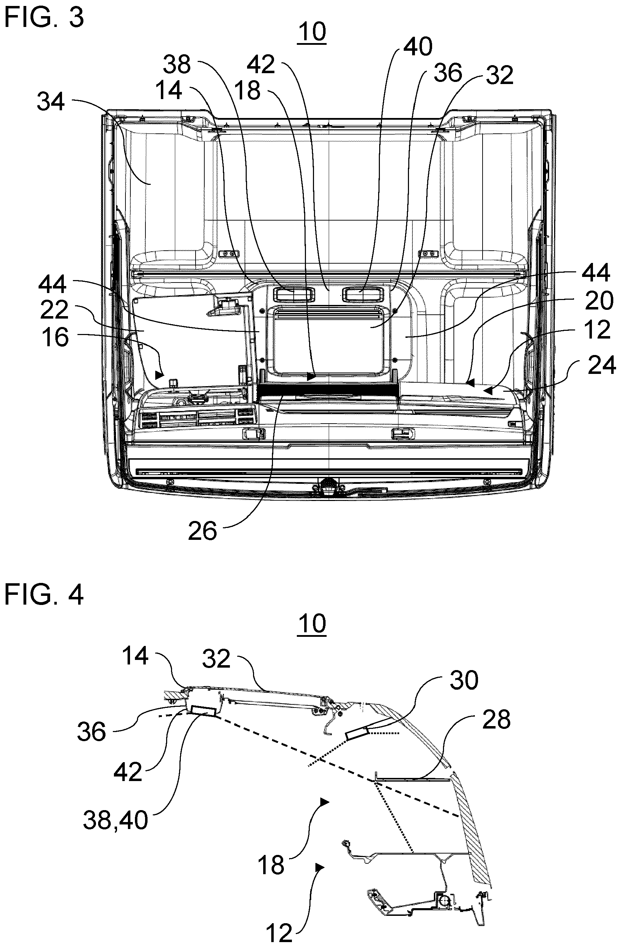

In den Figur 1 und 3 ist das Türelement 22 geöffnet, die Jalousie 26 ist geschlossen, und das Türelement 24 ist geschlossen. In der Figur 2 ist das Türelement 22 geöffnet und die Jalousie 26 geschlossen. In der Figur 4 ist die Jalousie 26 geöffnet bzw. nicht dargestellt.

Die Dachlukenvorrichtung 14 ermöglicht eine Be- und Entlüftung des Fahrerhauses. Die Dachlukenvorrichtung 14 kann mittig im Dachbereich 10 angeordnet sein. Die Dachlukenvorrichtung 14 kann eine öffenbare Dachluke 32 aufweisen. Die Dachluke 32 kann beispielsweise manuell oder motorisch geöffnet werden, je nach Ausführung.

Die Dachlukenvorrichtung 14 weist im Bereich eines Dachhimmels 34 des Dachbereichs 10 einen Rahmen bzw. eine rahmenförmige Verkleidung 36 auf. Die Verkleidung 36 verkleidet die Dachlukenvorrichtung 14 von innerhalb des Fahrerhauses.

Die Dachlukenvorrichtung 14 weist zudem zwei einschaltbare Beleuchtungselemente 38, 40 auf. Die Beleuchtungselemente 38, 40 sind an bzw. in einem hinteren (Längs-)Schenkel 42 der Verkleidung 36 angeordnet. Beispielsweise sind die zwei Beleuchtungselemente 38, 40 nebeneinander und mittig in dem Schenkel 42 angeordnet.

Die Türelemente 22, 24 weisen eine Höhe (Türelementhöhe) auf, die größer als ein Abstand entlang einer Längsrichtung des Fahrerhauses bzw. des Dachbereichs 19 zwischen den geschlossenen Türelementen 22, 24 und den zwei Beleuchtungselementen 38, 40 ist. Zweckmäßig sind die Beleuchtungselemente 38, 40 so angeordnet, dass sie durch die geöffneten Türelemente 22, 24 nicht verdeckt werden. Die Beleuchtungselemente 38, 40 können beispielsweise zumindest teilweise zwischen den geöffneten Türelementen 22, 24 im hinteren Schenkel 42 angeordnet sein.

Diese zentrale Anordnung der Beleuchtungselemente 38, 40 ermöglicht es einerseits, dass die Beleuchtungselemente 38, 40 einen Innenraum (Fahrer- und Beifahrerplatz) des Fahrerhauses beleuchten können. Andererseits ermöglicht diese Anordnung zudem, dass die Beleuchtungselemente 38, 40 zusätzlich die Staufächer 16, 18, 20 beleuchten können, wenn diese geöffnet sind. Die Türelemente 22, 24 verdecken die Beleuchtungselemente 38, 40 nicht. Die Beleuchtungselemente 38, 40 können beispielsweise manuell ein- und ausgeschaltet werden. Sofern die Beleuchtungselemente 38, 40 ausgeschaltet sind, können Sie auch automatisch beim Öffnen der Türelemente 22, 24 eingeschaltet und/oder beim Schließen der Türelemente 22, 24 ausgeschaltet werden, z. B. mittels eines Kontakts an der Staufachvorrichtung 12.

Bezüglich des mittleren Staufachs 18 kann zudem der untere Bereich unterhalb des Einlegebodens 28 beleuchtet werden, der von dem Staufach-Beleuchtungselement 30 nur unzureichend oder gar nicht beleuchtet werden kann. Zur Verdeutlichung sind in Figur 4 beispielhafte Strahlengänge der Beleuchtungselemente 38, 40 gestrichelt dargestellt, und beispielhafte Strahlengänge des Staufach-Beleuchtungselements 30 sind gepunktet dargestellt.

Die Beleuchtungselemente 38, 40 weisen somit eine Funktionsintegration als einerseits Innenraumbeleuchtung des Fahrerhauses und andererseits als Beleuchtung der Staufächer 16, 18, 20 auf. Damit kann beispielsweise auf eine separate Beleuchtung der Staufächer 16, 18, 20 zumindest teilweise verzichtet werden.

In einer Ausführungsform, die nicht unter den Anspruchsgegenstand fällt, kann auch möglich sein, dass die Beleuchtungselemente 38, 40 zumindest teilweise nicht in der Dachlukenvorrichtung 14 angeordnet sind, sondern an einer anderen Position am Dachhimmel 34.

Die in den Figuren 1 bis 4 dargestellte Konfiguration kann besonders bevorzugt verwendet werden, wenn der Dachbereich 10 vergleichsweise hoch ist, wie dargestellt. Typischerweise ist die Staufachvorrichtung 12 dann ebenfalls vergleichsweise hoch, z. B. in einem Bereich zwischen ca. 300 mm und ca. 500 mm. Dementsprechend sind auch die Türelemente 22, 24 hoch, sodass diese Beleuchtungselemente verdecken könnten, wenn die Beleuchtungselemente in den beiden Querschenkeln der Verkleidung 36 angeordnet wären. Die Beleuchtungselemente 38 und 40 sind daher im hinteren (Längs-)Schenkel 42 der Verkleidung 36 angeordnet. Zweckmäßig weist das mittlere Staufach 18 ferner kein nach oben schwenkbares Türelement auf, das die Beleuchtungselemente 38 und 40 verdecken könnte. Stattdessen kann das mittlere Staufach 18 beispielsweise mittels der Jalousie 26 verschließbar sein oder beispielsweise auch gar nicht verschließbar sein.

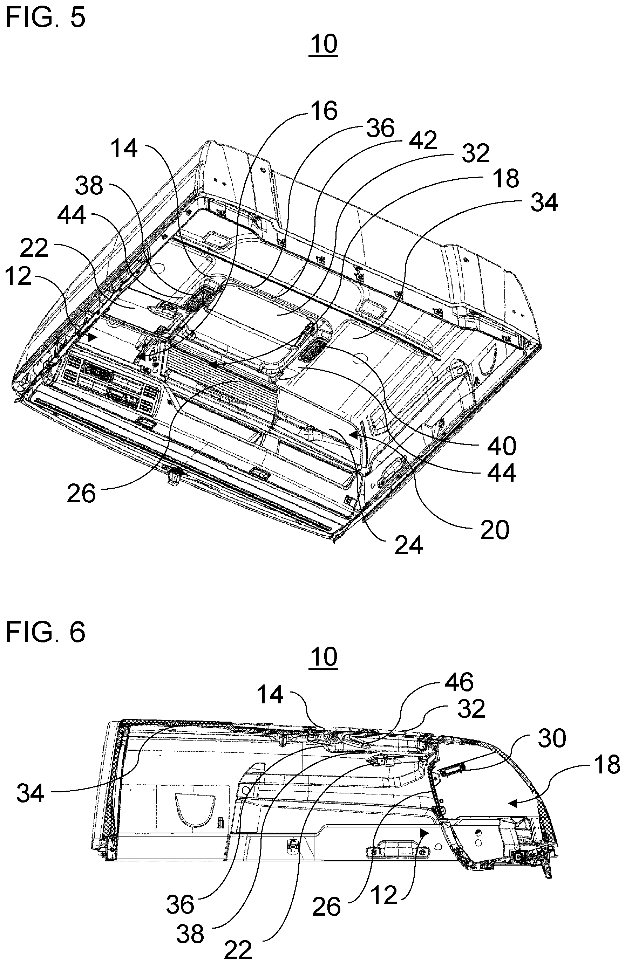

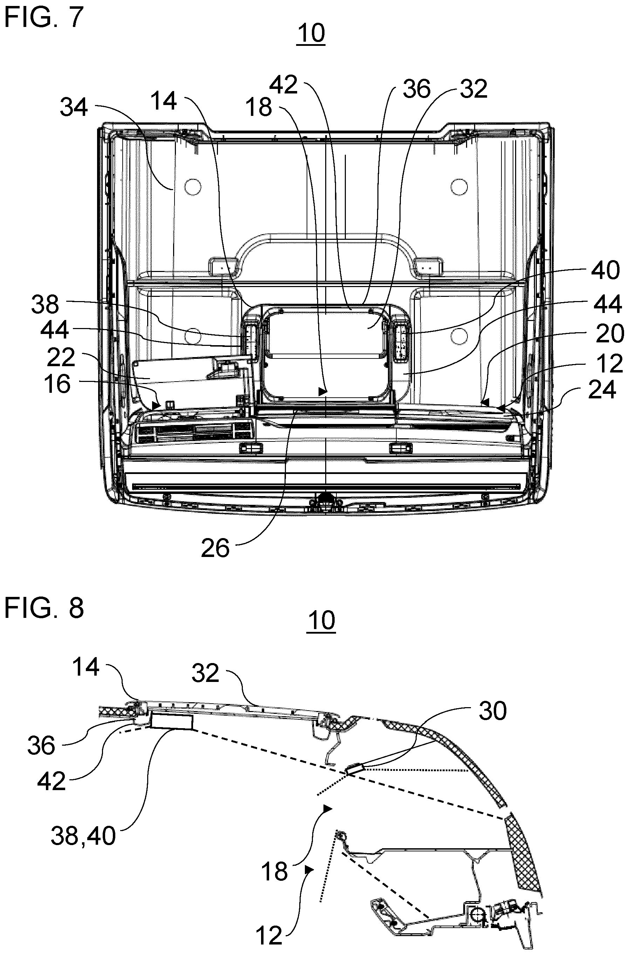

In den Figuren 5 bis 8 ist eine andere Konfiguration dargestellt. Diese Konfiguration kann wiederum besonders bevorzugt verwendet werden, wenn der Dachbereich 10 des Fahrerhauses mittelhoch ist, wie dargestellt. In diesem Fall kann die fahrerhausfrontseitige Staufachvorrichtung 12 dann ebenfalls mittelhoch sein, z. B. in einem Bereich zwischen ca. 250 mm und ca. 300 mm.

Die Türelemente 22, 24 der Konfiguration der Figuren 5 bis 8 sind dementsprechend weniger hoch als die Türelemente 22, 24 der Konfiguration der Figuren 1 bis 4. Dies ermöglicht, dass die Beleuchtungselemente 38, 40 in den parallel zur Fahrerhauslängsachse verlaufenden (Quer-) Schenkeln 44 des Rahmens bzw. der Verkleidung 36 angeordnet sein können. Im Einzelnen sind die Beleuchtungselemente 38, 40 direkt angrenzend an den hinteren Schenkel 42 angeordnet. Je nach Ausführung verdecken die Türelemente 22, 24 die Beleuchtungselemente 38, 40 nicht oder verdecken lediglich einen kurzen vorderen Abschnitt der Beleuchtungselemente 38, 40, wie dargestellt ist. In diesem vorderem Abschnitt der Beleuchtungselemente 38, 40 ist vorzugsweise ein (farbiger) Ambiente-Beleuchtungselementabschnitt der Beleuchtungselemente 38, 40 angeordnet. Die Ausleuchtung des Fahrerhaus-Innenraums und der Staufächer 16, 18, 20 wird durch das Verdecken des Ambiente-Beleuchtungselementabschnitts nicht beeinträchtigt. Es ist möglich, dass beispielsweise nur einer der Schenkel 42 ein Beleuchtungselement aufweist.

Die Anordnung der Beleuchtungselemente 38, 40 in den Schenkeln 44 kann einen weiteren entscheidenden Vorteil bieten. Im Bereich der Beleuchtungselemente 38, 40 ist die Verkleidung 36 zur Aufnahme der Beleuchtungselemente 38, 40 vergrößert bzw. nach unten verlängert. Diese Vergrößerung (Verlängerung nach unten) der Verkleidung 36 zur Aufnahme der Beleuchtungselemente 38, 40 schränkt zweckmäßig eine Kopffreiheit einer unter der Dachlukenvorrichtung 14 sitzenden Person nicht ein. Keine Person sitzt direkt unter den Querschenkeln 44. Die Aufnahme der Beleuchtungselemente 38, 40 ermöglicht, dass der hintere (Längs-)Schenkel 42, unter der sich durchaus eine sitzende Person auf einem mittleren Beifahrersitz befinden kann, zurückversetzt bzw. abgeflacht ausgeführt werden kann. Im Einzelnen kann eine Unterseitenfläche des hinteren Schenkels 42 gegenüber den Unterseitenflächen der Schenkel 44 zurückversetzt sein, z. B. in einem Bereich zwischen 30 mm und 40 mm oder mehr. Die Unterseitenfläche des hinteren Schenkels 42 kann ferner frei von Erhebungen, Einbauten und Anbauten sein, um dessen Abflachung zu gewährleisten. Die Unterseitenfläche des hinteren Schenkels 42 kann sich entlang einer gesamten Länge und Breite des hinteren Schenkels 42 flächig erstrecken. Dadurch kann eine Kopffreiheit für die auf dem mittleren Beifahrersitz sitzende Person erhöht werden. Dies ist auch insofern relevant, da der mittlere Beifahrersitz typischerweise erhöht angeordnet ist, da er auf dem Motortunnel angeordnet ist.

Die zurückversetzte Unterseitenfläche des hinteren Schenkels 42 erhöht den Komfort im normalen Betrieb durch eine Vergrößerung der Kopffreiheit. Zusätzlich kann jedoch auch auf vorteilhafte Weise ein Überlebensraum für eine auf dem mittleren Beifahrersitz sitzende Person in bestimmten Unfallsituation, insbesondere bei Überschlägen, vergrößert werden.

Beispielsweise kann bei einer vorbestimmten Unfallsituation nach ECE R29-3 (Stand Mai 2019) der Dachbereich 10 plastisch deformiert und eingedrückt werden. Im Test nach ECE-R29-3 C wird ein 180°-Seitwärtsüberschlag eines Lastkraftwagens derart gestellt, dass zunächst eine dynamische seitliche Fahrerhausbelastung (Schlag) auf die z.B. linke Fahrerhausseite (bzw. die Fahrerseite) mit einer Platte in einem Winkel von 20° zur Vertikalen aufgebracht wird, und zwar mit einer Last bzw. einer Energie von 17,6 kJ. Danach erfolgt eine statische Belastung des vorgecrashten Fahrerhauses durch Belastung des Dachs in Vertikalrichtung nach unten mit einer horizontalen Platte mit einer Last von 98 kN. Im Anschluss werden Dummies auf die Sitze des Fahrerhauses gesetzt, um zu überprüfen, ob diese einen Dachhimmel des Fahrerhauses berühren oder nicht.

Aufgrund der großzügig bemessenen Kopffreiheit durch die zurückversetzte Unterseitenfläche des hinteren Schenkels 42, kann ein Kontakt zwischen der Verkleidung 36 und der Person verhindert werden, da genügend Verformungsweg für den Dachbereich 10 zur Verfügung steht. Somit kann durch vergleichsweise einfach umzusetzende Maßnahmen, die die Dimensionierung und Ausbildung der Verkleidung 36 und die Anordnung der Beleuchtungselemente 38, 40 betreffen, ein genügend großer Überlebensraum für die Person auf dem mittleren Beifahrersitz geschaffen werden. Dies gelingt, ohne dass sehr viel aufwendigere Maßnahmen betreffend z. B. eine zusätzliche Versteifung des Dachbereichs 10 notwendig sind.

In diesem Zusammenhang kann es zudem vorteilhaft sein, einen Hebel 46 zum Öffnen und Schließen der Dachluke 32 so zu positionieren, dass er nicht in einen Bereich direkt unterhalb der zurückversetzten Unterseitenfläche des hinteren Schenkels 42 ragt. Zweckmäßig kann der Hebel 46 beispielsweise mittig an der Dachluke angebracht sein und in der Vorwärtsfahrtrichtung nach vorne auskragen, wie in der Figur 6 gezeigt ist.

Auf einer Oberseitenfläche können die Schenkel der Verkleidung 36 so geformt sein, dass sie eine Flüssigkeitsrinne bilden. Die Flüssigkeitsrinne kann beispielsweise kanalförmig geformt sein. Die Flüssigkeitsrinne dient zur Aufnahme von durch die geöffnete Dachluke 32 eindringender Flüssigkeit, z. B. Regentropen. Die Flüssigkeitsrinne kann die aufgenommene Flüssigkeit zu einer vorbestimmen Stelle leiten. Elektrische Komponenten (z. B. die Beleuchtungselemente 38, 40) können so vor Kontakt mit der eingedrungenen Flüssigkeit geschützt werden. Die unter der Dachlukenvorrichtung 14 sitzende Person kann ebenso vor Flüssigkeitstropfen geschützt werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Dachbereichs, der Staufachvorrichtung und/oder des Beleuchtungselements des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Dachbereich
- 12: Staufachvorrichtung
- 14: Dachlukenvorrichtung
- 16: Äußeres Staufach
- 18: Mittleres Staufach
- 20: Äußeres Staufach
- 22: Türelement
- 24: Türelement
- 26: Jalousie
- 28: Einlegeboden
- 30: Staufach-Beleuchtungselement
- 32: Dachluke
- 34: Dachhimmel
- 36: Verkleidung
- 38: Beleuchtungselement
- 40: Beleuchtungselement
- 42: Schenkel
- 44: Schenkel
- 46: Hebel

## Patentansprüche

1. Vorrichtung zur Beleuchtung eines Fahrerhauses für ein Nutzfahrzeug, vorzugsweise einen Lastkraftwagen, aufweisend:
einen Dachbereich (10);
eine Staufachvorrichtung (12), die im Dachbereich (10) angeordnet ist und zumindest teilweise mittels eines Türelements (22, 24) verschließbar ist; und
ein Beleuchtungselement (38, 40), das so an einem Dachhimmel (34) des Dachbereichs (10) angeordnet ist, dass mittels des Beleuchtungselements (38, 40) ein Fahrerhaus-Innenraum und ein Innenraum der Staufachvorrichtung (12) hinter dem Türelement (22, 24) bei vollständig geöffnetem Türelement (22, 24) beleuchtbar ist;
wobei das Beleuchtungselement (38, 40) in einem Rahmen oder einer rahmenförmigen Verkleidung (36) einer Dachlukenvorrichtung (14) angeordnet ist.

2. Vorrichtung nach Anspruch 1, wobei:
die Staufachvorrichtung (12) im vorderen Dachbereich und/oder fahrerhausfrontseitig angeordnet ist; und/oder
das Türelement (22, 24) zum Öffnen nach oben schwenkbar ist; und/oder
das Beleuchtungselement (38, 40) beim Öffnen des Türelements (22, 24) eingeschaltet und/oder beim Schließen des Türelements (22, 24) ausgeschaltet wird.

3. Vorrichtung nach Anspruch 1 oder Anspruch 2, wobei:
ein Abstand in einer Dachlängsrichtung zwischen dem mindestens einen Beleuchtungselement (38, 40) und dem Türelement (22, 24) gleich oder größer als eine Höhe des Türelements (22, 24) ist; und/oder
das Türelement (22, 24) im geöffneten Zustand das Beleuchtungselement (38, 40) nicht verdeckt.

4. Vorrichtung nach Anspruch 1 oder Anspruch 2, wobei:
das Türelement (22, 24) im geöffneten Zustand nur einen Ambiente-Beleuchtungsabschnitt des Beleuchtungselements (38, 40) verdeckt.

5. Vorrichtung nach einem der vorherigen Ansprüche, wobei:
das Beleuchtungselement (38, 40) in einem parallel zu einer Dachlängsrichtung ausgerichteten Schenkel (44) des Rahmens oder der rahmenförmigen Verkleidung (36) angeordnet ist.

6. Vorrichtung nach Anspruch 5, wobei:
das Beleuchtungselement (38, 40) zumindest teilweise in einem hinteren Eckbereich des Rahmens oder der rahmenförmigen Verkleidung (36) angeordnet ist; oder
das Beleuchtungselement (38, 40) angrenzend an einen hinteren Schenkel (42) des Rahmens oder der rahmenförmigen Verkleidung (36) angeordnet ist, wobei der hintere Schenkel (42) senkrecht zur Dachlängsrichtung ausgerichtet ist.

7. Vorrichtung nach Anspruch 5 oder Anspruch 6, wobei:
ein hinterer Schenkel (42) des Rahmens oder der rahmenförmigen Verkleidung (36) eine zurückversetzte Unterseitenfläche aufweist, vorzugsweise zum Erhöhen einer Kopffreiheit einer unter der Dachlukenvorrichtung (14) sitzenden Person,
wobei vorzugsweise:
die zurückversetzte Unterseitenfläche gegenüber mindestens einer Unterseitenfläche des parallel zu der Dachlängsrichtung ausgerichteten Schenkels (44) zurückversetzt ist, vorzugsweise um mindestens 20 mm, besonders bevorzugt um mindestens 30 mm, zum Beispiel in einem Bereich zwischen 30 mm und 40 mm; und/oder
die zurückversetzte Unterseitenfläche im Wesentlichen entlang einer gesamten Länge des hinteren Schenkels (42) zurückversetzt ist; und/oder
die zurückversetzte Unterseitenfläche im Wesentlichen entlang einer gesamten Breite des hinteren Schenkels (42) zurückversetzt ist.

8. Vorrichtung nach einem der Ansprüche 1 bis 4, wobei:
das Beleuchtungselement (38, 40) in einem senkrecht zur Dachlängsrichtung ausgerichteten, hinteren Schenkel (42) des Rahmens oder der rahmenförmigen Verkleidung (36) angeordnet ist.

9. Vorrichtung nach einem der vorherigen Ansprüche, ferner aufweisend:
ein weiteres Beleuchtungselement (38, 40),
wobei vorzugsweise:
das weitere Beleuchtungselement (38, 40) so an dem Dachhimmel (34) angeordnet ist, dass mittels des weiteren Beleuchtungselements (38, 40) der Fahrerhaus-Innenraum und der Innenraum der Staufachvorrichtung (12) hinter dem Türelement (22, 24) bei vollständig geöffnetem Türelement (22, 24) beleuchtbar ist; und/oder
das weitere Beleuchtungselement (38, 40) in dem Rahmen oder der rahmenförmigen Verkleidung (36) der Dachlukenvorrichtung (14) angeordnet ist, vorzugsweise an einer Position gegenüberliegend zu dem Beleuchtungselement (38, 40) oder neben dem Beleuchtungselement (38, 40).

10. Vorrichtung nach einem der vorherigen Ansprüche, wobei:
die Staufachvorrichtung (12) ein mittleres Staufach (18) mit einem Einlegeboden (28) aufweist; und
das Beleuchtungselement (38, 40) so angeordnet ist, dass ein Innenraum des mittleren Staufachs (18) unterhalb des Einlegebodens (28) beleuchtbar ist.

11. Vorrichtung nach Anspruch 10, wobei:
das mittlere Staufach (18) ein Staufach-Beleuchtungselement (38, 40) aufweist, mit dem ein Innenraum des mittleren Staufachs (18) oberhalb des Einlegebodens (28) beleuchtbar ist; und/oder
das mittlere Staufach (18) mittels einer Jalousie (26) verschließbar ist oder unverschließbar ist oder nicht mittels eines Türelements verschließbar ist.

12. Vorrichtung nach einem der vorherigen Ansprüche, wobei:
die Staufachvorrichtung (12) zwei äußere Staufächer (16, 20) aufweist, die jeweils mit einem Türelement (22, 24) verschließbar sind;
die Türelemente (22, 24) zum Öffnen nach oben schwenkbar sind;
die Türelemente (22, 24) eine Höhe aufweisen, die kleiner als ein Abstand in einer Dachlängsrichtung zwischen dem Beleuchtungselement (38, 40) und den Türelementen (22, 24) im geschlossen Zustand ist; und
das Beleuchtungselement (38, 40) in einem senkrecht zur Dachlängsrichtung ausgerichteten, hinteren Schenkel (42) eines Rahmens oder einer rahmenförmigen Verkleidung (36) einer Dachlukenvorrichtung (14) angeordnet ist,
wobei vorzugsweise:
der hintere Schenkel (42) und/oder das Beleuchtungselement (38, 40) im geöffneten Zustand der Türelemente (22, 24) zumindest teilweise zwischen den Türelementen (22, 24) angeordnet ist.

13. Vorrichtung nach einem der Ansprüche 1 bis 11, wobei:
die Staufachvorrichtung (12) zwei äußere Staufächer (16, 20) aufweist, die jeweils mit einem Türelement (22, 24) verschließbar sind;
die Türelemente (22, 24) zum Öffnen nach oben schwenkbar sind; und
das Beleuchtungselement (38, 40) in einem parallel zu einer Dachlängsrichtung ausgerichteten Schenkel (44) des Rahmens oder der rahmenförmigen Verkleidung (36) angeordnet ist,
wobei vorzugsweise:
eines der Türelemente (22, 24) im geöffneten Zustand nur einen Ambiente-Beleuchtungsabschnitt des Beleuchtungselements (38, 40) verdeckt; oder
keines der Türelemente (22, 24) im geöffneten Zustand das Beleuchtungselement (38, 40) verdeckt.

14. Nutzfahrzeug, vorzugsweise Lastkraftwagen, mit einer Vorrichtung nach einem der vorherigen Ansprüche.

## Claims

1. Device for lighting a driver's cab for a commercial vehicle, preferably a truck, comprising:
a roof portion (10);
a storage compartment device (12), which is arranged in the roof portion (10) and can be at least partially closed by means of a door element (22, 24); and
a lighting element (38, 40), which is arranged on a headliner (34) of the roof portion (10) in such a way that a driver's cab interior and an interior of the storage compartment device (12) behind the door element (22, 24) can be lighted by means of the lighting element (38, 40) when the door element (22, 24) is fully open;
wherein the lighting element (38, 40) is arranged in a frame or a frame-shaped cover (36) of a roof hatch device (14).

2. Device according to claim 1, wherein:
the storage compartment device (12) is arranged in the front roof portion and/or at the cab front side; and/or
the door element (22, 24) can be pivoted upwards for opening; and/or
the lighting element (38, 40) is switched on when the door element (22, 24) is opened and/or is switched off when the door element (22, 24) is closed.

3. Device according to claim 1 or claim 2, wherein:
a distance in a roof longitudinal direction between the at least one lighting element (38, 40) and the door element (22, 24) is equal to or greater than a height of the door element (22, 24); and/or
the door element (22, 24), when open, does not cover the lighting element (38, 40).

4. Device according to claim 1 or claim 2, wherein:
the door element (22, 24), when open, covers only an ambient lighting portion of the lighting element (38, 40).

5. Device according to one of the preceding claims, wherein:
the lighting element (38, 40) is arranged in a side (44) of the frame or the frame-shaped cover (36) that is aligned parallel to a roof longitudinal direction.

6. Device according to claim 5, wherein:
the lighting element (38, 40) is arranged at least partially in a rear corner portion of the frame or the frame-shaped cover (36); or
the lighting element (38, 40) is arranged adjacent to a rear side (42) of the frame or the frame-shaped cover (36), wherein the rear side (42) is aligned perpendicular to the roof longitudinal direction.

7. Device according to claim 5 or claim 6, wherein:
a rear side (42) of the frame or frame-shaped cover (36) has a recessed underside surface, preferably for increasing a headroom of a person sitting under the roof hatch device (14),
wherein preferably:
the recessed underside surface is recessed relative to at least one underside surface of the side (44) aligned parallel to the roof longitudinal direction, preferably by at least 20 mm, particularly preferably by at least 30 mm, for example in a range between 30 mm and 40 mm; and/or
the recessed underside surface is recessed substantially along an entire length of the rear side (42); and/or
the recessed underside surface is recessed substantially along an entire width of the rear side (42).

8. Device according to one of claims 1 to 4, wherein:
the lighting element (38, 40) is arranged in a rear side (42) of the frame or the frame-shaped cover (36) which is oriented perpendicular to the roof longitudinal direction.

9. Device according to any one of the preceding claims, further comprising:
a further lighting element (38, 40),
wherein preferably:
the further lighting element (38, 40) is arranged at the headliner (34) in such a way that the driver's cab interior and the interior of the storage compartment device (12) behind the door element (22, 24) can be lightened by means of the further lighting element (38, 40) when the door element (22, 24) is fully open; and/or
the further lighting element (38, 40) is arranged in the frame or the frame-shaped cover (36) of the roof hatch device (14), preferably at a position opposite to the lighting element (38, 40) or next to the lighting element (38, 40).

10. Device according to any one of the preceding claims, wherein:
the storage compartment device (12) comprises a middle storage compartment (18) with a shelf (28); and
the lighting element (38, 40) is arranged such that an interior of the middle storage compartment (18) below the shelf (28) can be lightened.

11. Device according to claim 10, wherein:
the middle storage compartment (18) has a storage compartment lighting element (38, 40), with which an interior of the central storage compartment (18) above the shelf (28) can be lightened; and/or
the middle storage compartment (18) can be closed by means of a shutter (26) or cannot be closed or cannot be closed by means of a door element.

12. Device according to any one of the preceding claims, wherein:
the storage compartment device (12) has two outer storage compartments (16, 20), each of which can be closed by a door element (22, 24);
the door elements (22, 24) can be pivoted upwards for opening;
the door elements (22, 24) have a height which is smaller than a distance in a roof longitudinal direction between the lighting element (38, 40) and the closed door elements (22, 24); and
the lighting element (38, 40) is arranged in a rear side (42) of a frame or a frame-shaped cover (36) of a roof hatch device (14) which is aligned perpendicular to the roof longitudinal direction,
wherein preferably:
the rear side (42) and/or the lighting element (38, 40) is arranged, in the open state of the door elements (22, 24), at least partially between the open door elements (22, 24).

13. Device according to one of claims 1 to 11, wherein:
the storage compartment device (12) has two outer storage compartments (16, 20), each of which can be closed by a door element (22, 24);
the door elements (22, 24) can be pivoted upwards for opening; and
the lighting element (38, 40) is arranged in a side (44) of the frame or the frame-shaped cover (36) which is aligned parallel to a roof longitudinal direction,
wherein preferably:
one of the door elements (22, 24) in the open state covers only an ambient lighting portion of the lighting element (38, 40); or
none of the door elements (22, 24), when open, conceals the lighting element (38, 40).

14. Commercial vehicle, preferably a truck, with a device according to any one of the preceding claims.

## Revendications

1. Dispositif d'éclairage d'une cabine de conducteur pour un véhicule utilitaire, de préférence un camion, présentant :
une zone de toit (10) ;
un dispositif de compartiment de rangement (12) qui est agencé dans la zone de toit (10) et qui peut être fermé au moins partiellement au moyen d'un élément de porte (22, 24) ; et
un élément d'éclairage (38, 40) qui est agencé sur un plafond (34) de la zone de toit (10) de telle sorte qu'au moyen de l'élément d'éclairage (38, 40), un espace intérieur de cabine de conducteur et un espace intérieur du dispositif de compartiment de rangement (12) derrière l'élément de porte (22, 24) peuvent être éclairés lorsque l'élément de porte (22, 24) est complètement ouvert ;
l'élément d'éclairage (38, 40) étant agencé dans un cadre ou un habillage en forme de cadre (36) d'un dispositif de toit ouvrant (14).

2. Dispositif selon la revendication 1, dans lequel :
le dispositif de compartiment de rangement (12) est agencé dans la zone de toit avant et/ou du côté frontal de la cabine de conducteur ; et/ou
l'élément de porte (22, 24) peut pivoter vers le haut pour s'ouvrir ; et/ou
l'élément d'éclairage (38, 40) s'allume lors de l'ouverture de l'élément de porte (22, 24) et/ou s'éteint lors de la fermeture de l'élément de porte (22, 24).

3. Dispositif selon la revendication 1 ou la revendication 2, dans lequel :
une distance dans une direction longitudinale du toit entre l'au moins un élément d'éclairage (38, 40) et l'élément de porte (22, 24) est égale ou supérieure à une hauteur de l'élément de porte (22, 24) ; et/ou
l'élément de porte (22, 24), à l'état ouvert, ne couvre pas l'élément d'éclairage (38, 40).

4. Dispositif selon la revendication 1 ou la revendication 2, dans lequel :
l'élément de porte (22, 24), à l'état ouvert, couvre uniquement une section d'éclairage d'ambiance de l'élément d'éclairage (38, 40).

5. Dispositif selon l'une quelconque des revendications précédentes, dans lequel :
l'élément d'éclairage (38, 40) est agencé dans une branche (44) du cadre ou de l'habillage en forme de cadre (36) orientée parallèlement à une direction longitudinale du toit.

6. Dispositif selon la revendication 5, dans lequel :
l'élément d'éclairage (38, 40) est agencé au moins partiellement dans une zone de coin arrière du cadre ou de l'habillage en forme de cadre (36) ; ou
l'élément d'éclairage (38, 40) est agencé de manière adjacente à une branche arrière (42) du cadre ou de l'habillage en forme de cadre (36), la branche arrière (42) étant orientée perpendiculairement à la direction longitudinale du toit.

7. Dispositif selon la revendication 5 ou la revendication 6, dans lequel :
une branche arrière (42) du cadre ou de l'habillage en forme de cadre (36) présente une surface inférieure en retrait, de préférence pour augmenter un espace libre pour la tête d'une personne assise sous le dispositif de toit ouvrant (14),
dans lequel de préférence :
la surface inférieure en retrait est en retrait par rapport à au moins une surface inférieure de la branche (44) orientée parallèlement à la direction longitudinale du toit, de préférence d'au moins 20 mm, de manière particulièrement préférée d'au moins 30 mm, par exemple dans une plage comprise entre 30 mm et 40 mm ; et/ou
la surface inférieure en retrait est en retrait essentiellement le long de toute une longueur de la branche arrière (42) ; et/ou
la surface inférieure en retrait est en retrait essentiellement le long de toute une largeur de la branche arrière (42).

8. Dispositif selon l'une quelconque des revendications 1 à 4, dans lequel :
l'élément d'éclairage (38, 40) est agencé dans une branche arrière (42) du cadre ou de l'habillage en forme de cadre (36) orientée perpendiculairement à la direction longitudinale du toit.

9. Dispositif selon l'une quelconque des revendications précédentes, présentant en outre :
un autre élément d'éclairage (38, 40),
dans lequel de préférence :
l'autre élément d'éclairage (38, 40) est agencé sur le plafond (34) de telle sorte qu'au moyen de l'autre élément d'éclairage (38, 40), l'espace intérieur de cabine de conducteur et l'espace intérieur du dispositif de compartiment de rangement (12) derrière l'élément de porte (22, 24) peuvent être éclairés lorsque l'élément de porte (22, 24) est complètement ouvert ; et/ou
l'autre élément d'éclairage (38, 40) est agencé dans le cadre ou l'habillage en forme de cadre (36) du dispositif de toit ouvrant (14), de préférence dans une position opposée à l'élément d'éclairage (38, 40) ou à côté de l'élément d'éclairage (38, 40).

10. Dispositif selon l'une quelconque des revendications précédentes, dans lequel :
le dispositif de compartiment de rangement (12) présente un compartiment de rangement central (18) avec une étagère (28) ; et
l'élément d'éclairage (38, 40) est agencé de telle sorte qu'un espace intérieur du compartiment de rangement central (18) sous l'étagère (28) peut être éclairé.

11. Dispositif selon la revendication 10, dans lequel :
le compartiment de rangement central (18) présente un élément d'éclairage de compartiment de rangement (38, 40), avec lequel un espace intérieur du compartiment de rangement central (18) au-dessus de l'étagère (28) peut être éclairé ; et/ou
le compartiment de rangement central (18) peut être fermé au moyen d'un store (26) ou ne peut pas être fermé ou ne peut pas être fermé au moyen d'un élément de porte.

12. Dispositif selon l'une quelconque des revendications précédentes, dans lequel :
le dispositif de compartiment de rangement (12) présente deux compartiments de rangement extérieurs (16, 20), qui peuvent chacun être fermés par un élément de porte (22, 24) ;
les éléments de porte (22, 24) peuvent pivoter vers le haut pour s'ouvrir ;
les éléments de porte (22, 24) présentent une hauteur qui est inférieure à une distance dans une direction longitudinale du toit entre l'élément d'éclairage (38, 40) et les éléments de porte (22, 24) à l'état fermé ; et
l'élément d'éclairage (38, 40) est agencé dans une branche arrière (42), orientée perpendiculairement à la direction longitudinale du toit, d'un cadre ou d'un habillage en forme de cadre (36) d'un dispositif de toit ouvrant (14),
dans lequel de préférence :
la branche arrière (42) et/ou l'élément d'éclairage (38, 40) est agencé au moins partiellement entre les éléments de porte (22, 24) à l'état ouvert des éléments de porte (22, 24).

13. Dispositif selon l'une quelconque des revendications 1 à 11, dans lequel :
le dispositif de compartiment de rangement (12) présente deux compartiments de rangement extérieurs (16, 20) qui peuvent chacun être fermés par un élément de porte (22, 24) ;
les éléments de porte (22, 24) peuvent pivoter vers le haut pour s'ouvrir ; et
l'élément d'éclairage (38, 40) est agencé dans une branche (44) du cadre ou de l'habillage en forme de cadre (36) orientée parallèlement à une direction longitudinale du toit,
dans lequel, de préférence :
l'un des éléments de porte (22, 24), à l'état ouvert, couvre uniquement une section d'éclairage d'ambiance de l'élément d'éclairage (38, 40) ; ou
aucun des éléments de porte (22, 24), à l'état ouvert, ne couvre l'élément d'éclairage (38, 40).

14. Véhicule utilitaire, de préférence camion, avec un dispositif selon l'une quelconque des revendications précédentes.
